# EUROPEAN PATENT APPLICATION

(11) **EP 0 931 717 A2**
(43) Date of publication of application: **28.07.1999**
(21) Application number: 99300436.5
(22) Date of filing: 21.01.1999
(51) Int. Cl.: B63B 7/08, B60R 9/055, B60P 3/10

(54) **Combined rigid inflatable boat and luggage carrier**

(30) Priority: 21.01.1998 GB 9801280
(71) Applicant: Walsby, James Robert, Maidenhead, Berkshire SL6 7QE (GB)
(72) Inventor: Walsby, James Robert, Maidenhead, Berkshire SL6 7QE (GB)
(74) Representative: McLeish, Nicholas Alistair Maxwell

(57) **Abstract**

An apparatus for use as a cargo carrying unit for mounting on a vehicle, part of which may also be used as the hull of a rigid inflatable boat. The apparatus comprises a body unit (20), a base unit (40), and fastening means (50) for securing the body unit to the base unit. The body unit comprises a hull section (22) and means for securing an inflatable collar (32) to the body unit to form a rigid hulled inflatable boat when combined with the collar. The base unit comprises a platform (42) and means for mounting the base unit to a vehicle. At least one of the body unit and the base unit comprising two mutually spaced side members (26,52) and the base unit being adapted to receive the upturned body unit in such a way that together the body unit and the base unit define an enclosed space for storage of cargo.

## Description

The present invention relates to a rigid inflatable boat and a cargo carrying unit for mounting on a vehicle.

Rigid inflatable boats (RIBs) are well-known, in which a rigid hull is surrounded by an inflatable collar and serves to combine many of the advantages of both inflatable boats and traditional rigid hulled boats.

Generally, boats are inconvenient to transport by road as they require the use of a trailer. Typically, RIBs are designed so that the inflatable collar may be easily removed from the rigid hull. This permits rapid replacement of the collar in the event of damage. Additionally, with the collar removed the RIB may be more easily transported by road without the use of a trailer e.g. by deflating the collar and placing the RIB hull and collar within the rear of an estate car or on a car roof rack. However, in this arrangement the hull and collar occupy a relatively large amount of space which might be more usefully occupied by other luggage.

Additionally, various roof box designs,commonly referred to as "top boxes",are known which may be mounted on the roofs of vehicles for carrying luggage and providing a streamlined secure container. Top boxes effectively increase the luggage carrying capacity of a vehicle and permit the transportation of relatively inconveniently shaped objects (such as skis) which might otherwise be difficult to accommodate inside an average family saloon. However, top boxes are relatively expensive, are often of relatively flimsy construction, and serve no useful purpose once the goods contained inside them have been transported to the required destination.

In order to address the problems of transporting a boat whilst at the same time providing a luggage carrier with a second use, EP-A1-87301161 discloses a two-piece combination boat and luggage carrier. The combination two-section boat and luggage carrier comprises first and second substantially identical sections which when superposed one on top of the other provide a watertight cargo carrier. However, when the two sections are connected adjacent to each other they form a conventional rigid hulled boat.

This system possesses a number of disadvantages. Firstly, as the boat which is formed is comprised of two sections, it inevitably comprises an inherent line of weakness along the centre of the boat. Additionally, as the boat is of conventional rigid hulled construction the sides of the boat must be relatively strong and load bearing , and thus relatively heavy - so increasing the weight of the luggage carrier and increasing fuel consumption of the carrying vehicle. Furthermore, when the two sections are joined together to form the boat, any luggage that had previously been contained within the two sections must be stored elsewhere.

It is an object of the present invention to address the above problems.

In one aspect, the present invention provides an apparatus for use as a cargo carrying unit for mounting on a vehicle, part of which may also be used as the hull of a rigid inflatable boat, the apparatus comprising: a body unit comprising a hull section and means for securing an inflatable collar to said body unit, said body unit forming a rigid hulled inflatable boat when combined with said collar; a base unit comprising a platform and means for mounting the base unit to a vehicle, at least one of said body unit and said base unit comprising two mutually spaced side members, and the base unit being adapted to receive the upturned body unit in such a way that together said body unit and said base unit define an enclosed space for the storage of cargo; the apparatus further comprising fastening means for securing the upturned body unit to the base unit.

The present invention thus provides a rigid hull inflatable boat, with no line of weakness along the centre of the boat. Furthermore, as part of the system forms a rigid inflatable boat rather than a conventional rigid hull boat, if the side pieces form part of the boat then the sides may be made relatively light as they are not load bearing and do not form part of the structural integrity of the hull. When in use as a cargo carrier, the streamline shape of the body unit serves to substantially cut down on the aerodynamic drag of the vehicle to which the cargo carrier is mounted. However, once the body unit has been removed to form a RIB, the base unit continues to provide a convenient platform for mounting cargo.

In a second aspect, the present invention provides an apparatus which may be used in conjunction with the hull of a rigid inflatable boat to form a cargo carrying unit for mounting on a vehicle, the apparatus comprising: a base unit comprising a platform, two mutually spaced side members, and means for mounting the base unit to a vehicle, the base unit being adapted to receive an upturned hull of a rigid inflatable boat in such a way that together said hull and said base unit define an enclosed space for the storage of cargo.

If the sides of the cargo carrying unit are mounted on the base unit in this way rather than on the body unit, then the base unit may be used in conjunction with a conventional RIB hull. Thus, only a specially designed base unit need be manufactured for this aspect of the invention to be realised.

Preferred embodiments of the invention will now be described with reference to the accompanying drawings in which:
Figure 1 is a plan view of a body unit in accordance with a preferred embodiment of the present invention and finding use as a RIB,
Figure 2 is a cross-sectional view of the embodiment of Figure 1 taken along the line XX,
Figure 3 is a cross-sectional view of the embodiment of Figure 1 taken along the line YY,
Figure 4 is a cross-sectional view of the embodiment of Figure 1 taken along the line YY and with the body unit mounted upon a base unit,
Figure 5 is a plan view of a base unit in accordance with a preferred embodiment of the present invention,
Figures 6A, 6B, and 6C are schematic diagrams of three different embodiments of the present invention.

The apparatus of the invention comprises a body unit (20), a base unit (40) and a fastening means (50).

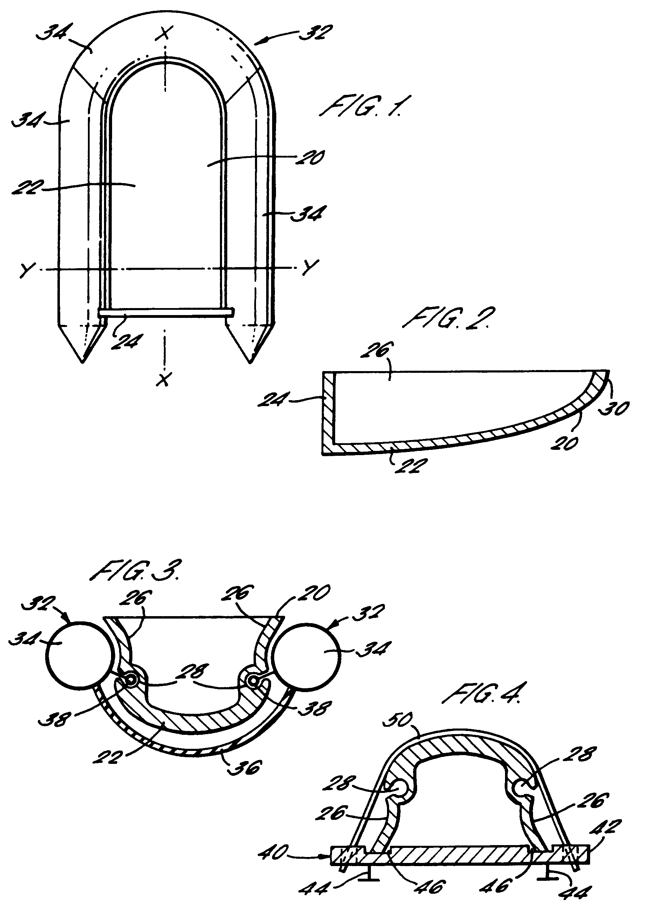

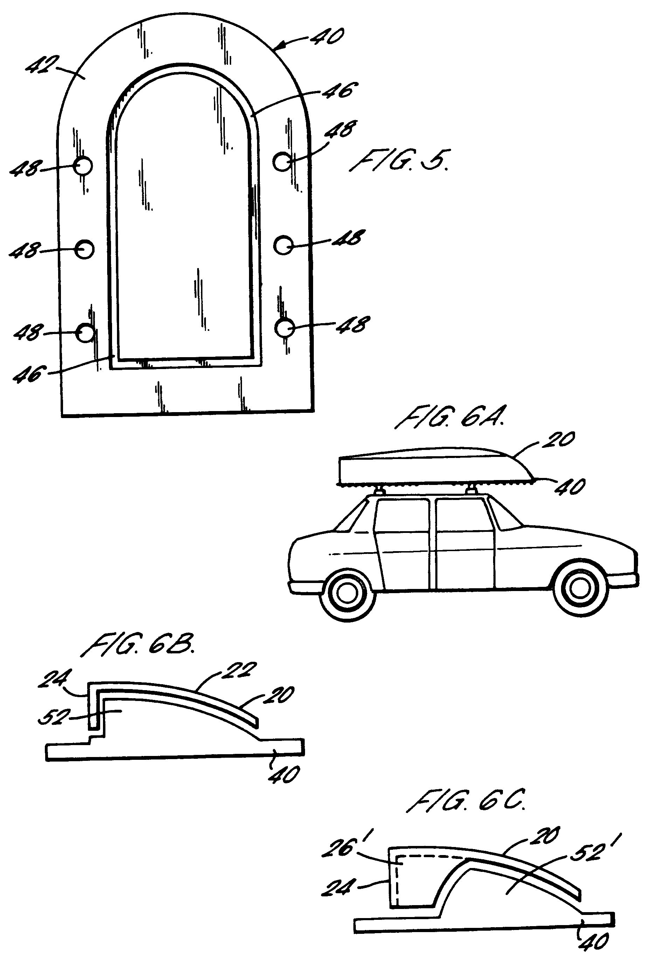

In Figures 1-4, the body unit (20) is formed by a hull section (22), a transom section (24) and two side members (26). The transom section (24) extends substantially perpendicularly from a rear of the hull section (22), with the transom section (24) and the hull section 22 together defining the shape of a hull of a RIB. The hull section (22) has a channel (28) extending around its external periphery.

Side members (26) extend from opposite ends of the transom section (24) along the length of the hull section (22) and terminate at an upturned bow (30). As can be seen in Figures 3 and 4, the side members (26) may be inwardly concavely curved.

An inflatable collar (32) with one or more inflatable compartments (34) may be secured around the perimeter of the body unit (20) so that together they form a rigid hulled inflatable boat (RIB). The internal perimeter of the inflatable collar (32) possesses a protrusion (38) which acts as a male member to interlock with the female member defined by the channel (28) to secure the collar (32) to the external perimeter of the body unit (20).

In the embodiment shown in Figure 3, the collar (32) is further provided with a skirt (36). The inflatable collar (32) is shaped such that when the body unit is being used in collaboration with the collar as a RIB, the skirt (36) underlies the base of the hull section (22), covering it and thereby preventing damage to the hull as a result of scratches from rocks and other obstacles.

As can be seen from Figure 3, the concave side members 26 are shaped so as to fit in positive location with the tubing of the inflatable collar (32).

As can be seen in Figures 4 and 5, the base unit (40) consists of a platform (42) and a roof rack mount (44).

The platform (42) is generally flat, with a recess (46) in which the gunnels of the body unit (20) may be positively located. Additionally, the platform may be provided with a number of apertures (48). The roof rack mount may be of standard construction.

Straps (50) may be passed through the apertures (48) to secure the upturned body unit (20) to the base unit (40).

Although the present invention has been described with reference to one particular embodiment, it will be appreciated that various alternatives may be used in place of those described above.

For instance, many methods of securing a RIB hull to an inflatable collar are known, and any of these might be used as an alternative to the channel (28) and projecting member (38) technique described above.

The roof rack mount (44) has been described as forming an integral part of the platform (42). However, it will be appreciated that the base unit (40) might simply consist of a platform (42), with appropriate mounting points to sit on an existing roof rack assembly.

Additionally,a collaboration of straps (50) and apertures (48) has been described as a means for securing the upturned body unit onto the base unit. It will be appreciated however, that many techniques for fastening such an upturned body unit to the base unit might be envisaged. For example various locking or clamping units might be used which might also incorporate a lock and key or other security device to prevent the removal of the body unit from the base unit by thieves or vandals.

The side members (26) may be of lighter weight construction than the hull section (22), as the side members (26) are not intended to form part of the load bearing structure of the RIB.

For instance, the hull section (22) may be of sheet aluminium construction, with the side members (26) being formed of aluminium of a thinner gauge. Alternatively, the hull section (22) may be of GRP\foam sandwich construction with the side members (26) only being formed of GRP.

Figure 6A shows a schematic diagram of the apparatus in use on a vehicle. As can be seen in Figure 6B, it is envisaged that in certain embodiments the invention might comprise a conventional RIB hull/transom section as the body unit, with the base unit being provided with side portions (52) instead of the side members (26) on the body unit described in conjunction with the previous embodiment.

Alternatively, as shown in Figure 6C, the body unit (20) may have partial side members (26') - with the platform having partial side portions (52').

In each embodiment, it is envisaged that a combination of the base unit and the upturned body unit interact to form an enclosed space in which cargo (e.g. luggage and also the deflated collar unit) may be secured.

Whilst the above apparatus has been described with reference to a road going vehicle, it will be appreciated that a similar system may be used in conjunction with other vehicles such as water based vehicles e.g. a canal cruiser or a yacht.

## Claims

1. An apparatus for use as a cargo carrying unit for mounting on a vehicle, part of which may also be used as the hull of a rigid inflatable boat, the apparatus comprising:
a body unit (20) comprising a hull section (22) and means for securing an inflatable collar (32) to said body unit, said body unit forming a rigid hulled inflatable boat when combined with said collar;
a base unit (40) comprising a platform (42) and means for mounting the base unit to a vehicle, at least one of said body unit and said base unit comprising two mutually spaced side members (26), and the base unit being adapted to receive the upturned body unit in such a way that together said body unit and said base unit define an enclosed space for the storage of cargo; the apparatus further comprising
fastening means (50) for securing the upturned body unit to the base unit.

2. The apparatus of claim 1, wherein said base unit (40) comprises said two mutually spaced side members (52).

3. The apparatus of claim 1 or claim 2, wherein said body unit (20) comprises said two mutually spaced side members (26).

4. The apparatus of claim 3, wherein said side members (26) are mutually inwardly concavely curved.

5. The apparatus of any preceding claim, wherein said body unit (20) further comprises a transom section (24) fixedly mounted to a rear of said hull section (22).

6. The apparatus of any preceding claim further comprising said inflatable collar (32), said inflatable collar being adapted to be stored within said enclosed space.

7. The apparatus of claim 6, wherein said inflatable collar (32) further comprises a sleeve portion (36) such that when said body unit (20) is combined with said collar to form a rigid hulled inflatable boat the sleeve portion underlies the otherwise exposed lower surface of the hull section.

8. The apparatus of any preceding claim, wherein said fastening means (50) includes a lockable portion for preventing the unauthorised removal of said body unit (20) from said base unit (40).

9. The apparatus of any preceding claim, wherein said hull section (22) is of a first construction and said side members (26) are of a second construction, said second construction being of lighter weight than said first construction.

10. An apparatus which may be used in conjunction with the hull of a rigid inflatable boat to form a cargo carrying unit for mounting on a vehicle, the apparatus comprising:
a base unit (40) comprising a platform (42), two mutually spaced side members (52), and means for mounting the base unit to a vehicle, the base unit being adapted to receive an upturned hull (22) of a rigid inflatable boat in such a way that together said hull and said base unit define an enclosed space for the storage of cargo.
